# EUROPEAN PATENT SPECIFICATION

(11) **EP 1 767 583 B1**
(45) Date of publication and mention of the grant of the patent: **27.11.2013**
(21) Application number: 05765131.7
(22) Date of filing: 23.06.2005
(51) Int. Cl.: C08L 101/00, C08L 33/16, D04H 1/42

(54) **RESIN COMPOSITION AND MOLDINGS THEREOF**
HARZZUSAMMENSETZUNGEN UND FORMKÖRPER DARAUS
COMPOSITION DE RESINE ET PRODUITS MOULES OBTENUS A PARTIR DE CELLE-CI

(30) Priority: 25.06.2004 JP 2004187850
(43) Date of publication of application: 28.03.2007
(73) Proprietor: DAIKIN INDUSTRIES, LTD., Osaka-shi, Osaka 530-8323 (JP)
(72) Inventor: MASUDA, Eiji Yodogawa Plant of Daikin Ind., Ltd., Settsu-shi, Osaka 5668585 (JP)
(74) Representative: HOFFMANN EITLE
(86) International application number: PCT/JP2005/011503
(87) International publication number: WO 2006/001322

(56) References cited:
- EP-A1- 0 807 664
- EP-A1- 0 931 817
- EP-A2- 0 713 939
- WO-A1-98/15598
- DE-A1- 10 050 391
- JP-A- 3 007 745
- JP-A- 3 041 162
- JP-A- 4 146 906
- JP-A- 10 120 910
- JP-A- 10 168 324
- JP-A- 62 089 752

## Description

### TECHNICAL FIELD

The present invention relates to a resin composition and a molded product comprising the same. The molded product is characterized in that the fluorine-containing polymer is segregated on a surface of the molded product. The molded product can be used as home household articles, stationeries, interior materials, sanitary supplies, medical supplies and the like.

### BACKGROUND ART

Hitherto, known are technologies of subjecting a surface of a molded article to a fluorine treatment to impart the water- and oil-repellency to the surface. A method of conducting the fluorine treatment after the molding, however, has the problem that the durability of water- and oil-repellency is weak so that the repeated use makes the water- and oil-repellency to be deteriorated. In order to solve this problem, the studies have been made that a fluorine-containing compound is added to a resin and then melt-kneaded before the molding of resin so that a fluorine component is segregated on a surface after the molding, to impart the water- and oil-repellency.

For example, Japanese Patent No. 2631911 discloses that a composition, which prepared by melt-kneading an oily or gum perfluorinated polyether or perfluorinated polypropylene oxide with a thermoplastic resin, can form a molded article wherein a fluorine content is different between an internal part and a surface of the molded article to segregate a larger amount of fluorine on the surface
The fluorine-containing additive, however, has relatively poor compatibility with the thermoplastic resin so that the kneading at high efficiency and high shear in an extruder is necessary. Japanese Patent No. 2505536 discloses that an ester of a monohydric or dihydric alcohol with a compound having a perfluoroalkyl group and one carboxyl group is melt-kneaded with a plastic and then molded to impart the water- and oil-repellency to a molded article. The amount of the fluorine-containing additive, however, is large to be about 5% by weight so that the cost of product is disadvantageous.

Japanese Patent No. 1574020 discloses that a polyfluoroalkyl ester compound limited to a compound melting at a molding temperature is kneaded with a rubber and subjected to a heat press first vulcanization at 180°C for 10 minutes and an oven second vulcanization at 150°C for 15 hours, consequently the polyfluoroalkyl ester compound is bled on the surface to form a non-tacky surface, whereby imparting the mold releasability and the water- and oil-repellency. Japanese Patent No. 2685904 discloses that a perfluoroalkyl group-containing ester is formulated with a thermoplastic resin in the amount of 0.1 to 5% by weight based on the thermoplastic resin, melt-kneaded, molded and then heat-treated at 70 to 130°C to exhibit the repellency to a solution containing a surfactant such as liquid cleaning agent. Intended alcohol repellency, however, cannot be obtained when the molded article produced by this method is evaluated.

US patent No. 6,380,289 discloses a thermoplastic composition prepared by incorporating a semi-crystalline first thermoplastic polymer with a surface modifier containing a fluorine-containing aliphatic group and a second thermoplastic polymer. The fluorine-containing aliphatic group in the surface modifier has 8 carbon atoms, as shown in Examples of said US patent.

Described below are the environmental problems raised by perfluorooctanoic acid (PFOA). The results of the latest researches [a report of the Environmental Protection Agency (EPA), "PRELIMINARY RISK ASSESSMENT OF THE DEVELOPMENTAL TOXICITY ASSOCIATED WITH EXPOSURE TO PERFLUOROOCTANOIC ACID AND ITS SALTS" (http://www.epa.gov/opptintr/pfoa/pfoara.pdf)] have taught that PFOA (perfluorooctanoic acid), one of long chain fluoroalkyl compounds, is proved to have a danger to burden the environment. Under such a situation, EPA announced on April 14, 2003 that the scientific investigation on PFOA should be more intensively executed.

On the other hand, the Federal Register (FR Vol.68, No.73/April 16, 2003 [FRL-7303-8], http://www.epa.gov/opptintr/pfoa/pfoafr.pdf), EPA Environmental News FOR RELEASE: MONDAY APRIL 14, 2003 EPA INTENSIFIES SCIENTIFIC INVESTIGATION OF A CHEMICAL PROCESSING AID (http://www.epa.gov/opptintr/pfoa/pfoaprs.pdf) and EPA OPPT FACT SHEET April 14, 2003 (http://www.epa.gov/opptintr/pfoa/pfoafacts.pdf) have published that telomers have a possibility to produce PFOA when decomposed or metabolized (herein, the telomer means a long chain fluoroalkyl group), and also that telomers have been widely used in foam fire extinguishers, care products, washing materials, carpets, textiles, paper, leather, etc., in order to impart water and oil repellency and soil resistance to them.

### DISCLOSURE OF THE INVENTION

### Problems to be Solved by the Invention

In order to maintain the repellency, it is necessary to segregate a fluorine-containing compound on a surface of a molded product by melt-kneading and molding a polymer and the fluorine-containing compound. Even if the molded articles, however, are produced according to conventional procedures, the limited conditions must be used for the reason of use of the fluorine-containing compound having poor compatibility with the thermoplastic resin, in order, that the fluorine-containing compound is easily segregated. In addition, even if the usual conditions can be used for the kneading, there are unpreferably problems in terms of cost and process, such as the problem that a large addition amount of the fluorine-containing compound should be used.

### Means for Solving the Problems

The present inventor intensively studied to solve these problems, discovered that a fluorine-containing compound is effectively segregated on a surface by melt-kneading and molding a thermoplastic resin with a specified fluorine-containing polymer to give a molded article, and therefore completed the present invention.

The present invention provides a resin composition as described in the claims.
The present invention relates also to a molded article molded from the resin composition. The shape of the molded article includes a fiber, a film and a tube.

### EFFECTS OF THE INVENTION

According to the present invention, a molded article excellent in water- and oil-repellency (particularly, alcohol-repellency) can be obtained. This molded article has a relative low cost and can be used for products such as home household articles (for example, a wash basin), stationeries (for example, an ink bottle), interior materials, sanitary supplies and medical supplies.

### MODES FOR CARRYING OUT THE INVENTION

Examples of the thermoplastic resin (A) include a polyamide resin (for example, nylon 6, nylon 12, nylon 66, aromatic nylon), a polyester resin (for example, polyethylene terephthalate and polybutylene terephthalate), a polyolefin resin (for example, polyethylene, polypropylene, a copolymer of ethylene and propylene, a copolymer of ethylene or propylene and C₄-C₂₀ alpha-olefin, a terpolymer of ethylene, propylene and C₄-C₂₀ alpha-olefin, a copolymer of ethylene and vinyl acetate, a copolymer of propylene and vinyl acetate, a copolymer of styrene and alpha-olefin, polybutylene and polyisobutylene), a polyether resin, a polyetherester resin, a polyacrylate resin , an ethylenealkyl acrylate resin , a polydiene resin (for example, a polybutadiene and a copolymer of isobutylene and isoprene), a polyurethane resin, a polyetheretherketone resin, a polyetherimide resin, a polyethersulfone resin, polyphenylene sulfide resin, and a polycarbonate resin.

Among them, the polyolefin resin is preferable. Polyethylene, polypropylene, an ethylene/propylene random copolymer, an ethylene/alpha-olefin copolymer, a propylene alpha-olefin copolymer, and polybutylene can be used as the polyolefin resin.
Polyethylene includes high-density polyethylene and low-density polyethylene. Polypropylene includes isotactic polypropylene, syndiotactic polypropylene, atactic polypropylene, and amorphous polypropylene.

The above-mentioned isotactic polypropylene is high-crystallinity propylene based on isotactic propylene prepared by using a Ziegler-Natta catalyst or a metallocene catalyst. The above-mentioned isotactic polypropylene can be selected and available from generally commercially available propylene for the molding, such as propylene for injection molding, propylene for extrusion molding, propylene for film and propylene for fiber.
The above-mentioned amorphous polypropylene is propylene having extremely low crystallinity prepared by using a metallocene catalyst. The amorphous polypropylene may be a mixture of propylene having extremely low crystallinity prepared by using a metallocene catalyst (for example, in the amount of at least 50% by weight based on total amount of the mixture) and other propylene. The amorphous polypropylene is available as, for example, Tafthren T-3512 and T-3522 manufactured by Sumitomo Chemical Co., Ltd.

In the present invention, the thermoplastic resin (A) may be a mixture of at least two thermoplastic resins. As the thermoplastic resin (A), there may be used a resin mixture of a first resin with a second resin having a crystallinity or melting point lower than the first resin. One of the crystallinity and the melting point of the second resin may be lower than those of the first resin, or both of the crystallinity and the melting point of the second resin may be lower than those of the first resin. The second resin may be a mixture of at least two.

The combinations of the first resin /second resin are polypropylene/polyethylene, polypropylene/polybutylene, polypropylene/polypropylene, polypropylene/propylene-alpha-olefin copolymer, and polypropylene/ethylene-alpha-olefin copolymer. Preferably, in the polypropylene/polypropylene combination, the first resin is isotactic propylene (crystalline propylene), and the second resin is amorphous propylene.
In the resin mixture of first resin and second resin, the amount of the second resin may be from 1 to 60% by weight, for example, from 2 to 40% by weight, particularly from 3 to 30% by weight, especially from 5 to 20% by weight.

The crystallinity means the heat of crystallization measured by DSC (Differential Scanning Calorimetry). The crystallinity is a heat of exothermic peak evolved when heated from 20°C to 200°C and then cooled to 20°C. The heat of crystallization of the second resin may be lower by at least 1 J/g, preferably at least 5 J/g, more preferably at least 10 J/g, for example, at least 15 J/g, particularly at least 20 J/g than the heat of crystallization of the first resin.

The melting point can be measured by DTA (Differential Thermal Analysis). The melting point is an endothermic peak evolved when heated from room temperature (10°C to 30°C). The melting point of the second resin may be lower by at least 10°C, preferably at least 15°C, for example, at least 20°C, particularly at least 25°C than the melting point of the first resin.

The degree of segregation at surface of a fluorine-containing compound can be analyzed by conducting a fluorine analysis of surface according to XPS (X-ray photoelectron spectroscopy). The degrees of segregation at surface of the fluorine-containing compound can be compared by values of fluorine concentration at surface obtained by this method.

The fluorine-containing polymer (B) is preferably a homopolymer of a fluorine-containing polymerizable compound, or a copolymer of a fluorine-containing polymerizable compound and copolymerizable compound (particularly, a fluorine-free polymerizable compound), which are prepared by conventionally known technologies.

The fluorine-containing polymerizable compound is a fluorine-containing acrylate ester of the formula: 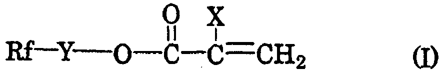
wherein X is a hydrogen atom, a methyl group, a fluorine atom, a chlorine atom, a bromine atom, an iodine atom, a CFX¹X² group (in which X¹ and X² are each a hydrogen atom, a fluorine atom, a chlorine atom, a bromine atom or an iodine atom), a cyano group, a linear or branched fluoroalkyl group having 1 to 21 carbon atoms, a substituted or unsubstituted benzyl group, or a substituted or unsubstituted phenyl group;
Y is an aliphatic group having 1 to 10 carbon atoms, an aromatic or cycloaliphatic group having 6 to 10 carbon atoms, a -CH₂CH₂N(R¹)SO₂- group (in which R¹ is an alkyl group having 1 to 4 carbon atoms) or a -CH₂CH(OY¹)CH₂- group (in which Y¹ is a hydrogen atom or an acetyl group); and
Rf is a linear or branched fluoroalkyl or fluoroalkenyl group having 1 to 6 carbon atoms.

In the fluorine-containing acrylate ester, X is preferably a hydrogen atom or a methyl group.

In the formula (I), the Rf group is preferably a perfluoroalkyl or perfluoroalkenyl group. The carbon number of the fluoroalkyl or fluoroalkenyl group is from 1 to 6, for example, from 1 to 4.
Examples of the fluoroalkyl group include -CF₃, - CF₂CF₃, -CF₂CF₂CF₃, -CF(CF₃)₂, -CF₂CF₂CF₂CF₃, -CF₂ CF (CF₃)₂, -C(CF₃)₃, -(CF₂)₄CF₃, -(CF₂)₂CF(CF₃)₂, -CF₂C(CF₃)₃, - CF(CF₃)CF₂CF₂CF₃, -(CF₂)₅CF₃, and - (CF₂)₃CF(CF₃)₂.
Examples of the fluoroalkenyl group include -CF=CF₂, - CF₂CF=CF₂, -(CF₂)₂CF=CF₂, -CF₂C(CF₃)=CF₂, -CF(CF₃)CF=CF₂, - (CF₂)₃CF=CF₂, -C(CF₃)₂CF=CF₂, -(CF₂)₂C(CF₃=CF₂, - (CF₂)₄CF=CF₂, -(CF₂)₄CF=CF₂ and -(CF₂)₃C(CF₃)=CF₂.

Y is an aliphatic group having 1 to 10 carbon atoms, an aromatic or cycloaliphatic group having 6 to 10 carbon atoms, a -CH₂CH₂N(R¹)SO₂- group (in which R¹ is an alkyl group having 1 to 4 carbon atoms) or a -CH₂CH(OY¹)CH₂-group (in which Y¹ is a hydrogen atom or an acetyl group). The aliphatic group is preferably an alkylene group (having particularly 1 to 4, for example, 1 or 2 carbon atoms). The aromatic or cycloaliphatic group may be substituted or unsubstituted.

Examples of the fluorine-containing polymerizable compound include acrylate esters of the formulas:

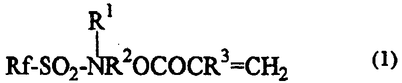

Rf-(CH₂)ₙOCOCR³=CH₂ (2)

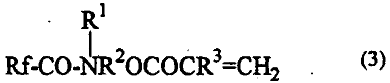

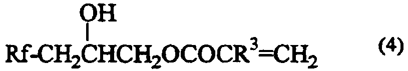

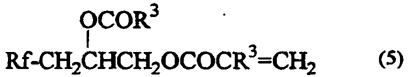

Rf-O-Ar-CH₂OCOCR³=CH₂ (6)

wherein Rf is a perfluoroalkyl group having 1 to 6 carbon atoms,
R¹ is hydrogen or an alkyl group having 1 to 10 carbon atoms,
R² is an alkylene group having 1 to 10 carbon atoms,
R³ is a hydrogen atom or a methyl group,
Ar is an aryl group optionally having a substituent group, and
n is an integer of 1 to 10.

Specific examples of the fluorine-containing polymerizable compound include:
CF₃(CF₂)₅ (CH₂)OCOCH=CH₂,
CF₃(CF₂)₅ (CH₂)OCOC(CH₃)=CH₂,
(CF₃)₂CF(CF₂)₃(CH₂)₂OCOCH=CH₂,
CF₃(CF₂)₃(CH₂)₂OCOC(CH₃)=CH₂,
CF₃(CF₂)₃(CH₂)₂OCOCH=CH₂,
CF₃CF₂(CH₂)₂OCOCH=CH₂,
CF₃(CF₂)₃SO₂N(CH₃)(CH₂)₂OCOCH=CH₂,
CF₃(CF₂)₃SO₂N(C₂H₅)(CH₂)₂OCOC(CH₃)=CH₂,
(CF₃)₂CF(CF₂)₃CH₂CH(OCOCH₃)CH₂OCOC(CH₃)=CH₂, and
(CF₃)₂CF(CF₂)₃CH₂CH(OH)CH₂OCOCH=CH₂.

The copolymerizable compound may be a fluorine-free polymerizable compound.
The fluorine-containing polymer may contain a chlorine-containing polymerizable compound as repeating units. The chlorine-containing polymerizable compound is a compound having both a chlorine atom and a carbon-carbon double bond. Examples of the chlorine-containing polymerizable compound are vinyl chloride, vinylidene chloride, alpha-chloroacrylate (for example, an alkyl (having 1 to 30 carbon atoms) ester) and 3-chloro-2-hydroxypropyl methacrylate.

The fluorine-free polymerizable compound may be, for example, a fluorine-free alkyl (meth)acrylate.
The fluorine-free alkyl (meth)acrylate is generally a compound of the formula:

X¹-CX²=CH₂ (i)

wherein X¹ is an alkyl carboxylate group (the alkyl group has 1 to 18 carbon atoms), and
X² is a hydrogen atom or a methyl group.
The fluorine-containing polymer may not contain the fluorine-free alkyl (meth)acrylate.

The other copolymerizable compound may be various. Examples of the other copolymerizable compound include:
(1) acrylic acid and methacrylic acid, and methyl, ethyl, butyl, isobutyl, t-butyl, propyl, 2-ethylhexyl, hexyl, decyl, lauryl, stearyl, isobornyl, β-hydroxyethyl, glycidyl, phenyl, benzyl and 4-cyanophenyl esters thereof;
(2) vinyl esters of fatty acids such as acetic acid, propionic acid, caprylic acid, lauric acid and stearic acid;
(3) styrene compounds such as styrene, α-methylstyrene and p-methylstyrene;
(4) vinyl and vinylidene halide compounds (excluding chlorides) such as vinyl fluoride, vinyl bromide and vinylidene fluoride;
(5) fatty acid allyl esters such as allyl heptanoate, allyl caprylate and allyl caproate;
(6) vinyl alkyl ketones such as vinyl methyl ketone and vinyl ethyl ketone;
(7) acryl amides such as N-methylacrylamide and N-methylolmethacrylamide; and
(8) dienes such as 2,3-dichloro-1,3-butadiene and isoprene.

In the fluorine-containing polymer which is the copolymer, the amount of the fluorine-containing polymerizable compound may be at least 10% by weight, for example, from 20 to 80% by weight, particularly from 30 to 60% by weight. In the fluorine-containing polymer, the amount of the chlorine-containing polymerizable compound is at most 50% by weight, for example, from 0 to 30% by weight, particularly from 0.5 to 25% by weight.
The molecular weight of the fluorine-containing polymer may be generally from 1,000 to 1,000,000, particularly from 3,000 to 50,000 (for example, in terms of polystyrene measured by GPC).

The amount of the fluorine-containing polymer (B) is from 0.1 to 10 parts by weight, for example, from 0.1 to 5 parts by weight, particularly from 0.5 to 3 parts by weight, based on 100 parts by weight of the thermoplastic resin (A).
The resin composition may contain additives (that is, auxiliaries), for example, a dye, a pigment, an antistatic agent, an antioxidant, a photo-stabilizers, a UV-absorber, a neutralizer, a nucleating agent, an epoxy-stabilizer, a sliding agent, a fungus preventing agent, a flame retardant, and a plasticizer, depending on the necessity.

The resin composition of the present invention can be obtained by kneading (for example, melt-kneading) the thermoplastic resin (A) with the fluorine-containing polymer (B). Generally, the thermoplastic resin (A) and the fluorine-containing polymer (B) are compatible under the melt state. The kneading can be conducted by conventional procedures, for example, a single screw extruder, a twin screw extruder and a roll. Thus obtained resin composition can be molded by conventional procedures such as an extrusion molding process, an injection molding process, a compression molding process and a film formation by press. The resin composition may be molded into various molded articles such as a fiber, a film and a tube. The obtained molded article may be heat-treated in an oven, a drying oven and the like, after the molding. The fiber may have a diameter of 0.2 to 2000 micrometers, for example, 0.5 to 50 micrometers, and a length of 0.2 mm to 200 mm, for example, 2 to 30 mm.

The resin composition of the present invention may be made in the form of a non-woven fabric. The non-woven fabric can be obtained by a carding method, an air laid method, a paper manufacturing method, or a melt blown method or a spun bond method wherein the non-woven fabric is directly obtained from the melt extrusion. In the melt extrusion, it is preferable to use a temperature of melting both the thermoplastic resin (A) and the fluorine-containing polymer (B). The basis weight of the non-woven fabric is not particularly limited, but may be from 0.1 to 1000 g/m². The basis weight of the non-woven fabric is, for example, from 5 to 60 g/m² for a surface material of a liquid-absorbing article and the like; from 10 to 500 g/m² for an absorbing article, a wiper and the like; from 8 to 1000 g/m² for a filter, according to uses of the non-woven fabric.

### EXAMPLES

Hereinafter, the present invention will be illustrated in detail by the following Examples.

### Comparative Example 1

PP-3155 (manufactured by Exxon Mobil Corporation) (first resin) (isotactic polypropylene) (90 parts by weight), Polyethylene J1019 (manufactured by Ube Industries, Ltd.) (second resin) (low density polyethylene) (10 parts by weight), a copolymer (fluorine-containing polymer) (1 part by weight) between CₙF₂ₙ₊₁CH₂CH₂OCOCH=CH₂ (a mixture of compounds wherein n is 6,8,10,12 and 14 (n is 8 on average)) (fluorine-containing monomer, hereinafter referred to as "FA") and stearyl acrylate (hereinafter referred to as "StA"), having a proportion of FA/StA = 40/60 (weight ratio) were mixed at 180°C in a twin screw extruder, and then molded by heat press to give a film.

The contact angle of a mixture liquid of IPA/water (70/30 (volume ratio)) and the contact angle of water were measured in order to evaluate the alcohol-repellency of this film. The segregation degree of the fluorine-containing compound at surface was measured by analyzing the fluorine component at surface by ESCA-3400 manufactured by Shimadzu Corporation. The melting point of the resin was measured by RTG220 manufactured by SII NanoTechnology Inc. The heat of crystallization of the resin was measured by DSC 822e manufactured by METTLER-TOLEDO K.K.

### Example 1

The same procedure as in Comparative Example 1 was repeated to prepare and evaluate a film, except using Polybutylene DP-8911 (manufactured by Shell Corporation) (10 parts by weight) as the second resin, and a copolymer of C₆F₁₃CH₂CH₂OCOCH=CH₂ (fluorine-containing monomer, hereinafter referred to as "13FA") and StA having a proportion of 13FA/StA=40/60 (weight ratio) as the fluorine-containing polymer.

### Example 2

The same procedure as in Example 1 was repeated to prepare and evaluate a film, except using a copolymer of C₆F₁₃CH₂CH₂OCOC(CH₃)=CH₂ (fluorine-containing monomer, hereinafter referred to as "13FMA") and StA having a proportion of 13FMA/StA=40/60 (weight ratio) as the fluorine-containing polymer.

### Example 3

The same procedure as in Comparative Example 1 was repeated to prepare and evaluate a film, except using Polyethylene J5019 (manufactured by Ube Industries, Ltd.) (low density polyethylene) (10 parts by weight) as the second resin, and a copolymer (1 part by weight) of C₄F₉CH₂CH₂OCOCH=CH₂ (fluorine-containing monomer, hereinafter referred to as "9FA") and StA having a proportion of 9FA/StA=40/60 (weight ratio) as the fluorine-containing polymer.

### Example 4

The same procedure as in Comparative Example 1 was repeated to prepare and evaluate a film, except using a copolymer (1 part by weight) of C₄F₉CH₂CH₂OCO(CH₃)=CH₂ (fluorine-containing monomer, hereinafter referred to as "9FMA") and StA having a proportion of 9FMA/StA=40/60 (weight ratio) as the fluorine-containing polymer.

### Example 5

The same procedure as in Comparative Example 1 was repeated to prepare and evaluate a film, except using a copolymer (1 part by weight) of C₄F₉CH₂CH₂OCOCCl=CH₂ (fluorine-containing monomer, hereinafter referred to as "9FC1A") and StA having a proportion of 9FClA/StA=40/60 (weight ratio) as the fluorine-containing polymer.

### Example 6

The same procedure as in Example 3 was repeated to prepare and evaluate a film, except using only Polyethylene J1019 (manufactured by Ube Industries, Ltd.) (100 parts by weight) as the thermoplastic resin.

### Example 7

The same procedure as in Comparative Example 1 was repeated to prepare and evaluate a film, except using Tafthren T-3512 (manufactured by Sumitomo Chemical Co., Ltd.) (amorphous polypropylene) (10 parts by weight) as the second resin, and a copolymer (1 part by weight) of C₄F₉CH₂CH₂OCOCH=CH₂ (fluorine-containing monomer, hereinafter referred to as "9FA") and stearyl methacrylate (hereinafter referred to as "StMA") having a proportion of 9FA/StMA=40/60 (weight ratio) as the fluorine-containing polymer.

Ingredients of Examples and Comparative Example are shown in Table 1, and contact angles and analysis results are shown in Table 2.

**Table 1**

| | First resin | | | | Second resin | | | | Fluorine-containing polymer | |
|---|---|---|---|---|---|---|---|---|---|---|
| | Type | Melting point | Heat of crystalli zation | Amount | Type | Melting point | Heat of crystalli zation | Amount | Type | Amount |
| Comp. Example 1 | High melting point PP | 168 °C | 101 J/g | 90 parts by weight | Low density PE | 110 °C | 100 J/g | 10 parts by weight | FA/StA | 1 parts by weight |
| Example 1 | High melting point PP | 168 °C | 101 J/g | 90 parts by weight | PB | 95 °C | 0.07 J/g | 10 parts by weight | 13FA/StA | 1 parts by weight |
| Example 2 | High melting point PP | 168 °C | 101 J/g | 90 parts by weight | PB | 95 °C | 0.07 J/g | 10 parts by weight | 13FMA/StA | 1 parts by weight |
| Example 3 | High melting point PP | 168 °C | 101 J/g | 90 parts by weight | Low density PE | 109 °C | 99 J/g | 10 parts by weight | 9FA/StA | 1 parts by weight |
| Example 4 | High melting point PP | 168 °C | 101 J/g | 90 parts by weight | Low density PE | 110 °C | 100 J/g | 10 parts by weight | 9FMA/StA | 1 parts by weight |
| Example 5 | High melting point PP | 168 °C | 101 J/g | 90 parts by weight | Low density PE | 110 °C | 100 J/g | 10 parts by weight | 9FClA/StA | 1 parts by weight |
| Example 6 | Low density PE | 110 °C | 100 J/g | 100 parts by weight | - | - | - | - | 9FA/StA | 1 parts by weight |
| Example 7 | High melting point PP | 168 °C | 101 J/g | 90 parts by weight | amorphous PP | 158 °C | 15 J/g | 10 parts by weight | 9FA/StMA | 1 parts by weight |

| | | | | | | | | | | |
|---|---|---|---|---|---|---|---|---|---|---|
| PP : polypropylene PE : polyethylene PB : polybutylene | | | | | | | | | | |

**Table 2**

| | | Com. Ex. 1 | Ex. 1 | Ex. 2 | Ex. 3 | Ex. 4 | Ex. 5 | Ex. 6 | Ex. 7 |
|---|---|---|---|---|---|---|---|---|---|
| Contact angle (°) | Ion exchanged water | 100 | 100 | 100 | 100 | 100 | 100 | 100 | 100 |
| | IPA/Ion exchanged water | 40 | 42 | 42 | 41 | 40 | 40 | 41 | 43 |
| Fluorine concentration at film surface (mass%) | | 15 | 18 | 18 | 17 | 17 | 17 | 17 | 18 |

From the results of Table 2, it is understood that the properties when the carbon number of the Rf group in the fluorine-containing polymerizable compound is 4 (Examples 3 to 7) and 6 (Examples 1 to 2) are at least comparable as the properties when the carbon number is 8 (Comparative Example 1).

## Claims

1. A resin composition comprising:
(A) 100 parts by weight of a thermoplastic resin which comprises (I-1) a first resin and (I-2) a second resin, wherein the combination of the first resin/second resin is selected from the group consisting of polypropylene/polyethylene, polypropylene/polybutylene, polypropylene/polypropylene, polypropylene/propylene-alpha-olefin copolymer, and polypropylene/ethylene-alpha-olefin copolymer; and
(B) 0.1 to 10 parts by weight of a fluorine-containing polymer having repeating units derived from a fluorine-containing acrylate ester of the formula: 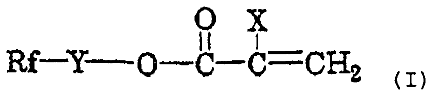
wherein X is a hydrogen atom, a methyl group, a fluorine atom, a chlorine atom, a bromine atom, an iodine atom, a CFX¹X² group (in which X¹ and X² are each a hydrogen atom, a fluorine atom, a chlorine atom, a bromine atom or an iodine atom), a cyano group, a linear or branched fluoroalkyl group having 1 to 21 carbon atoms, a substituted or unsubstituted benzyl group, or a substituted or unsubstituted phenyl group;
Y is an aliphatic group having 1 to 10 carbon atoms, an aromatic or cycloaliphatic group having 6 to 10 carbon atoms, a -CH₂CH₂N(R¹)SO₂- group (in which R¹ is an alkyl group having 1 to 4 carbon atoms) or a -CH₂CH(OY¹)CH₂- group (in which Y¹ is a hydrogen atom or an acetyl group); and
Rf is a linear or branched fluoroalkyl or fluoroalkenyl group having 1 to 6 carbon atoms.

2. The resin composition according to claim 1, wherein, in the resin mixture of first resin and second resin, the amount of the second resin is from 1 to 60 % by weight.

3. The resin composition according to claim 1, wherein the crystallinity or melting point of the first resin (I-1) is higher than the crystallinity or melting point of the second resin (I-2).

4. The resin composition according to claim 1, wherein the fluorine-containing polymer (B) is a homopolymer or copolymer containing the repeating unit derived from a fluorine-containing acrylate ester.

5. The resin composition according to claim 4, wherein, in the fluorine-containing acrylate ester of the formula (I), X is a hydrogen atom or a methyl group.

6. The resin composition according to claim 4, wherein the fluorine-containing polymer (B) is a copolymer of the fluorine-containing acrylate ester and fluorine-free polymerizable compound.

7. The resin composition according to claim 6, wherein the fluorine-free polymerizable compound is a fluorine-free alkyl (meth) acrylate.

8. The resin composition according to claim 7, wherein the fluorine-free alkyl (meth)acrylate is a compound of the formula:
X¹-CX²-CH₂ (i)
wherein X¹ is an alkyl carboxylate group (the alkyl group has 1 to 18 carbon atoms), and X² is a hydrogen atom or a methyl group.

9. The resin composition according to claim 1, which is prepared by melt-mixing the thermoplastic resin (A) with the fluorine-containing polymer (B).

10. A molded product obtainable by molding the resin composition according to anyone of claims 1 to 9.

11. Use of a molded product according to claim 10 as a home household product, stationery, interior material, sanitary supply or medical supply.

12. A non-woven fabric formed from fibers comprising the resin composition according to anyone of claims 1 to 9.

## Patentansprüche

1. Harzzusammensetzung, umfassend:
(A) 100 Gew.-Teile eines thermoplastischen Harzes, das (I-1) ein erstes Harz und (I-2) ein zweites Harz umfasst, wobei die Kombination erstes Harz/zweites Harz aus der Gruppe bestehend aus Polypropylen/Polyethylen, Polypropylen/Polybutylen, Polypropylen/Polypropylen, Polypropylen/Propylen-α-Olefin-Copolymer und Polypropylen/Ethylen-α-Olefin-Copolymer ausgewählt ist; und
(B) 0,1 bis 10 Gew.-Teile eines fluorhaltigen Polymers mit Wiederholungseinheiten, die von einem fluorhaltigen Acrylatester der Formel: 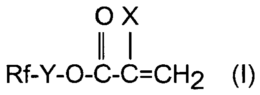 abgeleitet sind, worin
X ein Wasserstoffatom, eine Methylgruppe, ein Fluoratom, ein Chloratom, ein Bromatom, ein Iodatom, eine CFX¹X²-Gruppe (worin X¹ und X² jeweils ein Wasserstoffatom, ein Fluoratom, ein Chloratom, ein Bromatom oder ein Iodatom sind), eine Cyanogruppe, eine geradkettige oder verzweigte Fluoralkylgruppe mit 1 bis 21 Kohlenstoffatomen, eine substituierte oder unsubstituierte Benzylgruppe oder eine substituierte oder unsubstituierte Phenylgruppe ist;
Y eine aliphatische Gruppe mit 1 bis 10 Kohlenstoffatomen, eine aromatische oder cycloaliphatische Gruppe mit 6 bis 10 Kohlenstoffatomen, eine -CH₂CH₂N(R¹)SO₂-Gruppe (worin R¹ eine Alkylgruppe mit 1 bis 4 Kohlenstoffatomen ist) oder eine -CH₂CH(OY¹)CH₂-Gruppe (worin Y¹ ein Wasserstoffatom oder eine Acetylgruppe ist) ist; und
Rf eine geradkettige oder verzweigte Fluoralkyl- oder Fluoralkenylgruppe mit 1 bis 6 Kohlenstoffatomen ist.

2. Harzzusammensetzung gemäss Anspruch 1, wobei in der Harzmischung aus dem ersten Harz und zweiten Harz die Menge des zweiten Harzes 1 bis 60 Gew.% beträgt.

3. Harzzusammensetzung gemäss Anspruch 1, wobei die Kristallinität oder der Schmelzpunkt des ersten Harzes (I-1) höher als die Kristallinität oder der Schmelzpunkt des zweiten Harzes (I-2) ist.

4. Harzzusammensetzung gemäss Anspruch 1, wobei das fluorhaltige Polymer (B) ein Homopolymer oder Copolymer ist, das die von einem fluorhaltigen Acrylatester abgeleitete Wiederholungseinheit enthält.

5. Harzzusammensetzung gemäss Anspruch 4, wobei in dem fluorhaltigen Acrylatester der Formel (I) X ein Wasserstoffatom oder eine Methylgruppe ist.

6. Harzzusammensetzung gemäss Anspruch 4, wobei das fluorhaltige Polymer (B) ein Copolymer des fluorhaltigen Acrylatesters und einer fluorfreien polymerisierbaren Verbindung ist.

7. Harzzusammensetzung gemäss Anspruch 6, wobei die fluorfreie polymerisierbare Verbindung ein fluorfreies Alkyl(meth)acrylat ist.

8. Harzzusammensetzung gemäss Anspruch 7, wobei das fluorfreie Methyl(meth)acrylat eine Verbindung der Formel:
X¹-CX²=CH₂ (i)
ist, worin X¹ eine Alkylcarboxylatgruppe (die Alkylgruppe weist 1 bis 18 Kohlenstoffatome auf) ist und X² ein Wasserstoffatom oder eine Methylgruppe ist.

9. Harzzusammensetzung gemäss Anspruch 1, die durch Schmelzmischen des thermoplastischen Harzes (A) mit dem fluorhaltigen Polymer (B) hergestellt wird.

10. Formkörper, der durch Formen der Harzzusammensetzung gemäss irgendeinem der Ansprüche 1 bis 9 erhältlich ist.

11. Verwendung eines Formkörpers gemäss Anspruch 10 als Haushaltsartikel, Büromaterial, Innenausstattungsmaterial, für die sanitäre Versorgung oder die medizinische Versorgung.

12. Vliesstoff, der aus Fasern gebildet ist, die die Harzzusammensetzung gemäss irgendeinem der Ansprüche 1 bis 9 umfassen.

## Revendications

1. Composition de résine comprenant :
(A) 100 parties en masse d'une résine thermoplastique qui comprend (I-1) une première résine et (I-2) une seconde résine, dans laquelle la combinaison des première résine/seconde résine est choisie dans le groupe constitué par le polypropylène/polyéthylène, le polypropylène/polybutylène, le polypropylène/polypropylène, le polypropylène/copolymère de propylène-oléfine-alpha, et le polypropylène/ copolymère d'éthylène-oléfine-alpha ; et
(B) 0,1 à 10 parties en masse d'un polymère contenant du fluor ayant des unités répétitives dérivées d'un ester d'acrylate contenant du fluor de la formule : 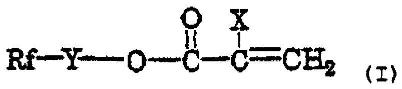
dans laquelle X est un atome d'hydrogène, un groupe méthyle, un atome de fluor, un atome de chlore, un atome de brome, un atome d'iode, un groupe CFX¹X² (où X¹ et X² sont chacun un atome d'hydrogène, un atome de fluor, un atome de chlore, un atome de brome ou un atome d'iode), un groupe cyano, un groupe fluoroalkyle linéaire ou ramifié ayant de 1 à 21 atomes de carbone, un groupe benzyle substitué ou non substitué, ou un groupe phényle substitué ou non substitué ;
Y est un groupe aliphatique ayant de 1 à 10 atomes de carbone, un groupe aromatique ou cycloaliphatique ayant de 6 à 10 atomes de carbone, un groupe -CH₂CH₂N(R¹)SO₂- (où R¹ est un groupe alkyle ayant de 1 à 4 atomes de carbone) ou un groupe -CH₂CH(OY¹)CH₂- (où Y¹ est un atome d'hydrogène ou un groupe acétyle) ; et
Rf est un groupe fluoroalkyle ou fluoroalcényle linéaire ou ramifié ayant de 1 à 6 atomes de carbone.

2. Composition de résine selon la revendication 1, dans laquelle, dans le mélange de résine des première résine et seconde résine, la quantité de la seconde résine est de 1 à 60 % en masse.

3. Composition de résine selon la revendication 1, dans laquelle la cristallinité ou le point de fusion de la première résine (I-1) est supérieure à la cristallinité ou le point de fusion de la seconde résine (I-2).

4. Composition de résine selon la revendication 1, dans laquelle le polymère contenant du fluor (B) est un homopolymère ou copolymère contenant l'unité répétitive dérivée d'un ester d'acrylate contenant du fluor.

5. Composition de résine selon la revendication 4, dans laquelle dans l'ester d'acrylate contenant du fluor de la formule (I), X est un atome d'hydrogène ou un groupe méthyle.

6. Composition de résine selon la revendication 4, dans laquelle le polymère contenant du fluor (B) est un copolymère de l'ester d'acrylate contenant du fluor et d'un composé polymérisable exempt de fluor.

7. Composition de résine selon la revendication 6, dans laquelle le composé polymérisable exempt de fluor est un (méth)acrylate d'alkyle exempt de fluor.

8. Composition de résine selon la revendication 7, dans laquelle le (méth)acrylate d'alkyle exempt de fluor est un composé de la formule :
X¹-CX²=CH₂ (i)
dans laquelle X¹ est un groupe carboxylate d'alkyle (le groupe alkyle présente de 1 à 18 atomes de carbone), et X² est un atome d'hydrogène ou un groupe méthyle.

9. Composition de résine selon la revendication 1, laquelle est préparée par mélange à l'état de fusion de la résine thermoplastique (A) avec le polymère contenant du fluor (B).

10. Produit moulé pouvant être obtenu par moulage de la composition de résine selon l'une quelconque des revendications 1 à 9.

11. Utilisation d'un produit moulé selon la revendication 10 comme un produit ménager domestique, des fournitures de bureau, un matériau intérieur, une distribution sanitaire ou une distribution médicale.

12. Tissu non tissé formé de fibres comprenant la composition de résine selon l'une quelconque des revendications 1 à 9.
